# EUROPÄISCHE PATENTSCHRIFT

(11) **EP 0 815 938 B1**
(45) Veröffentlichungstag und Bekanntmachung des Hinweises auf die Patenterteilung: **08.05.2002**
(21) Anmeldenummer: 96902215.1
(22) Anmeldetag: 16.02.1996
(51) Int. Cl.: B01J 23/889, B01D 53/94, B01D 53/86

(54) **KATALYSATOR ZUR REINIGUNG VON INDUSTRIE- UND AUTOABGASEN**
A CATALYST FOR PURIFICATION OF INDUSTRIAL AND AUTOMOTIVE VEHICLE EXHAUST GAS
CATALYSEUR POUR L'EPURATION DES EFFLUENTS GAZEUX INDUSTRIELS ET DES GAZ D'ECHAPPEMENT DE VEHICULES AUTOMOBILES

(30) Priorität: 17.02.1995 CN 95102004
(43) Veröffentlichungstag der Anmeldung: 07.01.1998
(73) Patentinhaber: Duan, Zhongshan, Shanghai 200040 (CN); Duan, Fengying, Shanghai 200040 (CN); Lu, Yongnian, Shanghai 200040 (CN); Duan, Fixun, Shanghai 200040 (CN); Duan, Junwei, Shanghai 200040 (CN)
(72) Erfinder: Duan, Zhongshan, Shanghai 200040 (CN); Duan, Fengying, Shanghai 200040 (CN); Lu, Yongnian, Shanghai 200040 (CN); Duan, Fixun, Shanghai 200040 (CN); Duan, Junwei, Shanghai 200040 (CN)
(74) Vertreter: Zwirner, Gottfried, Dipl.-Ing. Dipl.-W.-Ing.
(86) Internationale Anmeldenummer: CN9600016
(87) Internationale Veröffentlichungsnummer: WO9625229

(56) Entgegenhaltungen:
- EP-A- 0 532 024
- EP-A- 0 614 692
- WO-A-90/06177
- WO-A-94/19427
- CN-A- 1 046 473
- US-A- 5 182 249
- DATABASE WPI Section Ch, Week 8945 Derwent Publications Ltd., London, GB; Class J04, AN 89-329278 XP002056746 & JP 01 245 858 A (SHINGIJUTSU KAIHATSU KK) , 2.Oktober 1989

## Beschreibung

### Technikbereich

Diese Erfindung bezieht sich auf einen Katalysator, insbesondere auf einen Katalysator zur Reinigung von Industrie- oder Autoabgasen.

### Stand der Technik

Seit Jahren legt man immer größeren Wert auf Umweltschutz. In vielen Ländern gibt es ein Umweltschutzgesetz und entsprechende Regelungen. Die Menge an Schadenstoffen in Abgasen wurde streng beschränkt. Entsprechende Normen wurden erstellt. Dies führte zur Entwicklung und Verbesserung des Katalysators, der die Schadenstoffe in den Abgasen abbaut. Mit dem Fortschritt der Industrialisierung steigt die Autoanzahl rapid an. Nach der Statistik sind in den USA 60% der Umweltverschmutzung auf Autoabgase zurückzuführen, während die Industrieverschmutzung bei 17% liegt. Die schädlichen Bestandteile der Autoabgase bestehen hauptsächlich aus Kohlenmonoxid (CO), unverbrannten Kohlenwasserstoffen (HC) sowie Stickoxiden (NOₓ), welche hauptsächlich aus NO und NO₂ besteht. Die Stickoxid sind ein allgemeinbekannte Substanzen, welche die Erzeugung von Ozon in der unteren Atmosphäre fördert.

Für den Abbau des Kohlenmonoxids (CO) oder der Kohlenwasserstoffes (HC) in den Abgasen stehen zur Zeit verschiedene Katalysatoren zur Verfügung. Aber man benötigt einen Katalysator, die gleichzeitig CO, HC und NOₓ in unschädliche Gase umwandeln kann. Das Problem ist daran zusehen, daß es sich einerseits beim Abbau des CO und HC um einen Oxidations- vorganang handelt, während die Umwandlung des NOₓ zu dem inerten Gas N₂ ein Reduktionsvorgang ist. Daher muß der Katalysator für den Abbau dieser drei Substanzen ein Katalysator sein, der sowohl eine Oxidation als auch eine Reduktion fördert. Vorraussetzung für das richtige Arbeiten des Katalysators ist das genau eingehaltene Verhältnis von Brennstoff und Luft , das innerhalb einem vorbestimmten Bereich liegen muß. Außerdem führt die Verwendung von Bleibenzin (wie in China) zur "Vergiftung " des Katalysators. Auch Sulfide in den Abgasen können zur Vergiftung des Katalysators führen. Deshalb ist die Benutzung des Bleibenzins in den westlichen Länder (wie in den USA) nicht für Fahrzeuge mit Katalysator vorgesehen.

Die Nutzung von Edelmetallen wie Pt, Rh und Pd als Aktivkomponenten des Katalysators zur Reinigung der Autoabgase geht aus vielen Dokumenten hervor. Aber die Verwendung von Edelmetallen und Seltenerdemetalle führt ohne Zweifel zur höheren Kosten des Katalysators.

Auch Nicht-Edelmetalle können als Aktivkomponenten verwendet werden. Allerdings zeigt sich Nachteile bei dem Abbau oder der Reinigung in niedrigen Temperaturen. Außerdem sind die Abbauleistung sowie die Lebensdauer solcher Katalysatoren niedriger. Manche Katalysatoren weisen Sauerstoffsensoren und ein Erhitzungsgerät auf.

In der chinesischen Patentanmeldung CN 85 109 694 A ist ein Katalysator mit wabenförmigen Nichtedelmetallen beschrieben. Außer Doppelträgern werden Oxide von Cu, V, Mn, Co und Ni oder deren Mischoxide sowie Oxide von Seltenerdemetallen wie La, Ce, Pr, Sm, Nd und Y als Aktivkomponenten verwendet.

Die chinesische Patentanmeldung CN 1 228 272 A offenbart einen ähnlichen Katalysator zu dieser Patentanmeldung CN 85 109 694 A 85 109 694.8 zum Abbau der Autoabgase. Er besitzt einen aus wabenförmiger Keramik und Aluminiumoxid bestehenden Kompoundträger. Als Aktivkomponenten sind ein oder mehrere Metalloxiden wie Zn, Co, Ni, Mn, Cu und Cr sowie Seltenerdemetallen zu verwenden. Aber in der Herstellungsmethode wurden die Oxiden mit H, CO und Kohlenwasserstoff reduziert. Daher wäre es gut möglich, daß ein Teil der aktiven Metalloxide wieder zu Metall umgewandelt wird. Außerdem ist beim Verfahren zur Herstellung des Katalysator vorzusehen, daß der Katalysator bei Temperaturen zwischen 700 bis 1100°C geglüht wird. Das ist eigentlich nicht empfehlenswert. γ-Al₂O₃ ist bei Temperaturen zwischen 200 bis 600 °C amorph und verfügt dann in diesen Bereich über die beste Aktivität und Dispersionsfähigkeit. Aber wenn die Temperatur auf über 865 °C steigt, ist γ-Al₂O₃ kristalmäßig instabil und dessen Aktivität und Dispersionsfähigkeit verschlechtern sich. Bei 1000°C wandelt γ-Al₂O₃ sich zum unaktiven α-Al₂O₃, welches sich leicht vom Träger abtragen läßt.

EP-A 0 393 517 offenbart einen Katalysator zur Reinigung der Abgase eines Verbrennungsmotors. Er kann die unverbrannten Hydrowasserstoffe und CO zur vollen Verbrennung führen und Stickoxide zur Stickstoff und Sauerstoff umwandeln. Der Katalysator verwendet Cr-, Mn-, Fe-, Co-, Ni-, Cu-, Zn-, Sn-, Ba-, La- und Ce-oxide als Aktivkomponente. Die chemische Zusammensetzung dieses Katalysators bestehen aus Cu 26% (Gewicht), Cr 21% und BaO = 11%. Aber wenn der Katalysator an der Öffnung des Autoschalldämpfers angebracht wird, muß eine Heizeinrichtung vorgesehen sein, damit die abzubauenden Abgase bei Temperaturen zwischen 200 - 400 °C anzutreffen sind.

In US-PS Patent 4 519 992 (Alkhazov et. all) ist ein Verfahren zur Reinigung von H₂S offenbart, wobei ein Katalysator mit folgender Zusammensetzung verwendet wurde: TiO₂ 10-30% (Gewicht), Fe₂O₃ 20-30%, Zn₂O₃ 20-25%, Cr-Oxid 20-50%. Mit Luft wird H₂S oxidiert. Der Katalysator wurde so erzeugt, indem man Metallsalzlösung (z.B. Salzsäure) mit Ammoniaklösung reagieren läßt. Es entstehen Hydroxide der entsprechen Metalle. Diese werden dann gleichmäßig gemischt, getrocknet und erhitzt. Am Ende erhält man die entsprechende Oxide.

In GB 2 059 934 ist ein Katalysator zur Reinigung von N₂O veroffenbart, welcher eine oder mehrere Bestandteile, ausgewählt aus Fe-, Co-, Cu-, Cr-, Mn- und Ni-oxide als Aktivkomponente enthält. In der Beschreibung ist ein aus höchstens drei verschiedenen Metalloxiden bestehender Katalysator dargestellt. Dies wird durch Tränkung des Träger mit der Salzlösung (z.B. Nitratlösung) , Trocknung und Glühung erzeugt. Am Ende entstehen dann die Oxide durch Zerfall der Salze.

Ein Katalysator aus Nichtedelmetallen ist aus US-A-5 182 249 bekannt. Der Katalysator enthält einen ersten Täger z.B. aus einem keramischen Material und einen zweiten Träger aus ausgewählten Metalloxiden, die mit Lanthandiden stabilisiert werden, ferner noch eine Katalysatorschicht aus Oxiden, darunter Kobalt, Mangan, Nickel, Kupfer,Chrom,Zink und Neodym. Der Aufbau des Katalysators mit einer Metalloxid-Trägerschicht ist mit erhöhten Kosten verbunden.

Bei der Reinigung der Abgase von Raffinerien, insbesondere beim Cracken mit fluidisiertem Katalysator, ist es bekannt (WO 94 19427 A) Perovskite mit mindestens einem Übergangsmetall und Spinelle mit mindestens einem Element der Gruppe II A und einem Element der Gruppe III A bei einer Stabilisierungskomponente zu verwenden, die Kupfer, Zink oder Mischungen davon enthält. Dieses Katalysatormaterial eignet sich zum Abbau von Stickoxiden in Abgasen, welche hohe Anteile von Schwefeloxiden und Sauerstoff enthalten dürfen, es muss aber nach Verwendung immer wieder aufbereitet werden, was bei einem fest installierten Katalysator nicht möglich ist.

Bei der katalytischen Reduktion von Stickoxiden in Abgasen von Fabriken und Automobilen ist es bekannt (EP-A-0 532 024) oxidische Verbindungen des Typs Perovskit zu verwenden, bei denen u.a. Neodym, Zink, Mangan, Kobalt, Eisen, Nickel, Chrom und Kupfer auf einem festen sauren Träger verwendet werden. Diese besonderen Voraussetzungen werden bei der Erfindung nicht angewendet.

### Kurzfassung:

Der Erfindung liegt die Aufgabe zugrunde, einen Katalysator zum Abbau von Industrieabgasen und/oder Autoabgasen bereitzustellen, der gegenüber Schwefel- und Bleiverbindungen unempfindlich ist, auch bei relativ niedriger Temperatur arbeitet und eine hohe Reinigungsleistung sowie eine lange Lebensdauer haben soll.

Die gestellte Aufgabe wird aufgrund der in Anspruch 1 oder 4 angegebenen Zusammensetzung von Aktivkomponenten des Katalysators gelöst. Die abhängigen Ansprüche geben nähere Grenzwerte an oder beziehen sich auf Weiterbildungen und Ausgestaltungen der Erfindung.

### Ausführungsbeispiele der Erfindung

Die Erfindung bietet einen Katalysator zur Reinigung der Autoabgase an. Der Katalysator verfügt als Aktivkomponenten über Cu-, Ni-, Co-, Zn-, Cr-, Mn- und Nd-oxide sowie aus zwei oder mehreren der genannten Metalloxiden gebildeten Mischoxide. Darunter sind die verschiedenen Metalloxidmischungen wie folgt möglich (auf das Trägergewicht bezogene Gewichtprozentsätze):

| | |
|---|---|
| CuO | 2 -- 20% |
| NiO | 0,5 -- 8% |
| CoO | 0,1 -- 4% |
| Cr₂O₃ | 1 - - 7% |
| ZnO | 0,5 -- 10% |
| MnO | 0,05 -- 6%. |
| Nd₂O₃ | 0,1 -- 1% |

In einem bevorzugten Ausführungsbeispiel sind die auf das Trägergewicht bezogene Gewichtprozentsätze der Medtalloxide wie folgt:

| | |
|---|---|
| CuO | 4-- 16% |
| NiO | 1-- 6% |
| CoO | 0,4 -- 3% |
| Cr₂O₃ | 2 -- 5% |
| ZnO | 1 -- 8% |
| MnO | 0,1 -- 5% |
| Nd₂O₃ | 0,3 - 0,9% |

In einem weiteren Ausführungsbeispiel enthält der Katalysator γ-Al₂O₃, dessen auf das Trägergewicht bezogene Anteil zwischen 2-12% liegt. Der Katalysator zur Reinigung von Industrieabgasen verfügt als Aktivkomponenten über Cu-, Ni-, Co-, Zn-, Cr-, Mn- und Nd-oxide sowie über Mischoxide aus zwei oder mehreren genannten Metalloxiden. Bevorzugt werden die auf das Trägergewicht bezogene Gewichtprozentsätze der verschiedenen Metalloxide wie folgt:

| | |
|---|---|
| CuO | 2 -- 20% |
| NiO | 0,5 -- 8% |
| CoO | 0,1 -- 4% |
| Cr₂O₃ | 1 -- 7% |
| ZnO | 2 -- 16% |
| Fe₂O₃ | 0,2 -- 1,5% |
| MnO | 0,05 -- 6% |
| Nd₂O₃ | 0,1 -- 1% |

In einem bevorzugten Ausführungsbeispiel sind die auf das Trägergewicht bezogene Gewichtprozentsätze von Metalloxiden wie folgt:

| | |
|---|---|
| CuO | 4 -- 16% |
| NiO | 2 -- 6% |
| CoO | 0,4 -- 3% |
| Cr₂O₃ | 2 -- 5% |
| ZnO | 6 -- 12% |
| Fe₂O₃ | 0,4 -- 1% |
| MnO | 0,1 -- 5% |
| Nd₂O₃ | 0,3 -- 0,9% |

Die Erfindung umfaßt auch ein Verfahren zur Herstellung eines Katalysators. Dieser enthält Cu-, Ni-, Co-, Zn-, Cr-, Mn- und Nd-oxide sowie aus zwei oder mehreren genannten Metalloxiden bildende Mischoxide als Aktivkomponenten. Darunter sind die auf das Trägergewicht bezogene Gewichtprozentsätze der verschiedenen Metalloxide wie folgt:

| | |
|---|---|
| CuO | 2 -- 20% |
| NiO | 0,5 -- 8% |
| CoO | 0,1 -- 4% |
| Cr₂O₃ | 1 -- 7% |
| ZnO | 0,5 -- 6% |
| MnO | 0,05 -- 6% |
| Nd₂O₃ | 0,1 -- 1% |

Ein geeigneter Träger wird in der Cu-, Ni-, Co-, Zn-, Mnund Nd-Salzlösung getränkt, dann in der Luft bei Temperaturen zwischen 70-120°C getrocknet und bei 120-600°C geglüht. Der Katalysator ist dann hergestellt. Vorzugsweise wird der angefertigte Katalysator in γ-Al₂O₃ -Lösung getränkt, dann bei 70-800°C getrocknet. Bei Zerlegen der Salze können zwei oder mehrere Mischoxide entstehen.

Die Aktivkomponenten werden in Oxid umgerechnet. D.h. alle eventuelle bestehende Mischoxide werden in entsprechende Metalloxide umgerechnet. Die Salz von o.g. Metallen können bei Glühen ihre Oxide bilden. Es kann Nitrat, Sulfat oder Phosphat als Ausgangsmaterial benutzt werden. Nitrat wird bevorzugt.

Die Konzentration der Salzlösung und die Dosierung der entsprechenden Metallsalze soll dazu führen, daß die daraus zerlegten Oxide/Mischoxide im angegebenen Bereich liegen. Konkret gesagt, soll die Lösungskonzentration bei 5-50 Gew.% (Wasser als Lösungsmittel) liegen, Cu-Salz zwischen 2- 30%, Ni-Salz zwischen 1-15%, Co-Salz zwischen 0,5 - 8%, Mn- Salz zwischen 0,1-1%, Zn-Salz zwischen 0,1-20% , Cr-Salz zwischen 0,05-1%, mit Nd-Salz als Rest.

In ähnlicher Weise kann ein Katalysator zur Reinigung von Sulfid hergestellt werden. Vorzugsweise kann der hergestellte Katalysator wieder in basischer Tier-, oder Pflanzenfett- oder Seifenlösung getränkt und getrocknet werden . Der Katalysator kann dann Blei vertragen. Natriumstearatlösung wird bevorzugt. An sich kann jeder geeignete Träger benutzt werden. Keramik wird als Träger bevorzugt. Der bevorzugte Keramikträger enthält mehr als 92% Cordierit, dessen Hygroskozipität zwischen 35 bis 40% liegt und dessen spezifischen Oberfläche > 3 m²/g beträgt.

Die Erfindung wird mit weiteren Ausführungsbeispiele wird im einzelnen beschrieben:

### Ausführungsbeispiel 1:

### Herstellung des Katalysators zur Reinigung von Autoabgasen.

In einem 5-liter-Behälter wird 361g Cu(NO₃)₂.3H₂O, 180g Ni(NO₃)₂.6H₂O, 70g Co(NO₃)₂.6H₂O mit 200ml Wasser gerührt. In einem anderen 200ml-Behälter setzt man 20ml 20%-ige Salpetersäure und 6g Nd₂O₃ sowie 50ml Wasser zu. Die sich daraus bildende Lösung wird dann in einem 5-liter-Behälter gegeben und mit Salpetersäure oder Wasser auf den PH-Wert zwischen 4-7 eingestellt. Dann wird 7g Mn-Nitrat, 52g Cr-Nitrat und 35g Zn-Nitrat zugefügt, mit Wasser bis auf 1000ml aufgefüllt. Damit ist die Probelösung vorbereitet. Ein Keramik-Träger von 50g( hergestellt von der 2. Shanghai Feuerfestmaterial-Fabrik, mit Porendurchmesser von 300 bis 400 µm und mit einem spezifischen Oberfläche >3 m²/g) wird in dier oben vorbereiteten Lösung für eine Stunde getränkt. Der Lösungsrückstand wird abgefiltert. Der Träger wird dann in der Luft bei 70-800°C getrocknet und geglüht. Daraus entsteht ein Katalysator A mit folgenden auf das Trägergewicht bezogenen Gewichtprozentsätze der Aktivkomponenten: CuO = 11,9%, NiO = 4,6%, CoO = 1,8%, MnO = 0,29%, Cr₂O₃ = 3,3%, ZnO = 1,5 % und Nd₂O₃ = 0,6%.

### Ausführungsbeispiel 2:

Ein Keramik-Träger von 50g( hergestellt von der 2. Shanghai Feuerfestmaterial-Fabrik, mit Porendurchmesser von 300 bis 400 µm und mit einem spezifischen Oberfläche >3 m²/g) wird in der oben vorbereiteten Lösung für eine Stunde getränkt. Der Lösungsrückstand wird abgefiltert. Der Träger wird dann in der Luft bei 70-600°C getrocknet und geglüht. Nach der Abkühlung wurde der Träger in der zubereiteten γ-Al₂O₃- Lösung (100ml 7%) für eine Stunde getränkt. Daraus entsteht ein Katalysator B mit folgenden auf das Trägergewicht bezogenen Gewichtprozentsätze der Aktivkomponenten:
CuO = 11,9%, NiO = 4,6%, CoO = 1,8%, MnO = 0,29%, Cr₂O₃ = 3,3%, ZnO = 1,5 und Nd₂O₃ = 0,6%.

### Ausführungsbiespiel 3:

### Herstellung eines Katalysator zur Reinigung von Sulfiden.

In einen Behälter wird 100 ml der in Ausführungsbeispiel 1 zubereitete Lösung gegeben, und 2g Fe(NO₃)₃9H₂O und 20g Zn(NO₃)₂ unter Rühren zugesetzt. Keramik-Träger von 50g (hergestellt von der 2. Shanghai Feuerfestmaterial-Fabrik, mit einem Porendurchmesser von 300 bis 400 µm und einem spezifischen Oberfläche >3 m²/g) in die oben vorbereitete Lösung für eine Stunde eingetränkt. Der Lösungsrückstand wird abgefiltert. Der Träger wird dann in der Luft bei 70-120°C getrocknet und bei 120-600°C geglüht. Der so erhaltene Katalysator C weist als Aktivkomponenten folgende auf das Trägergewicht bezogene Gewichtprozentsätze auf:
CuO = 11,9%, NiO = 4,6%, CoO = 1,8%, MnO = 0,29%, Cr₂O₃ = 3,3%, ZnO = 9,6%, Fe₂O₃ = 0,8% und Nd₂O₃ = 0,6%.

### Ausführungsbeispiel 4:

Die in obigen Ausführungsbeispielen hergestellten Katalysatoren A,B und C werden in Seifenlösung(von Shanghai Seifenfabrik produkzierte Gu-Ben Seifen) eingetränkt. Nach der Abtrocknung erhält man Katalysator D,E und F.

### Ausführungsbeispiel 5:

In einem 5-Liter-Behälter mit Rührer setzt man 200ml Wasser und 210g Cu(NO₃)₂.3H₂O, 105g Ni(NO₃)₂.6H₂O, 35g Co(NO₃)₂.6H₂O zu. In einem weiteren 200 ml-Behälter setzt man 20ml von 20% Salpetersäue und 6g Nd₂O₃ sowie 50ml Wasser zu. Die sich daraus bildende Lösung wird dann in einem 5-liter-Behälter gegeben, mit Salpetersäure oder Wasser wird der pH- Wert zwischen 4-7 eingestellt. Dann wird 91g Mn-Nitrat, 63g Cr-Nitrat und 182g Zn-Nitrat hinzugefügt und mit Wasser bis 1000ml aufgefüllt. Damit ist die Probelösung vorbereitet.

Ein Keramik-Träger von 50g (hergestellt von der 2. Shanghai Feuerfestmaterial-Fabrik, mit Porendurchmesser von 300 bis 400 µm und einem spezifischen Oberfläche >3 m²/g) in die oben vorbereitete Lösung für eine Stunde eingetränkt. Der Lösungsrückstand wird abgefiltert. Der Träger wird dann in der Luft bei 70-120°C getrocknet und bei 120-600°C geglüht. Ein Katalysator G mit folgenden auf das Trägergewicht bezogenen Gewichtprozentsätze der Aktivkomponenten wird somit hergestellt:
CuO = 6,9%, NiO = 2,7%, CoO = 0,9%, MnO = 3,6%, Cr₂O₃ = 4%, ZnO = 7,8% und Nd₂O₃ = 0,6%.

In folgenden Experimenten werden jeweils Katalysatoren (Träger+Aktivkomponenen) von etwa 390g benutzt. Die Katalysatoren werden in geeignet umgebauten Autoschalldämpern eingebaut und getestet.

Das Experiment mit dem Katalysator A wurde von der Beijing Jeep Automobil GmbH unter US Normen EPA-75 mit dem Autotyp Qienoji CX-1 Model durchgeführt.

### Versuchskonditionen:

1.Gerät HORIBA MEXA-9400 Abgaseanalysegerät und dessen Datenverarbeitungsystem, Präzision ±2%
   Japan ONO SKKI Chassis-Leistungsanalyser mit Präzision ±2%
2.Straßentest

| | | | | | | | | | | |
|---|---|---|---|---|---|---|---|---|---|---|
| Geschw. km/h | 10 | 20 | 30 | 40 | 50 | 60 | 70 | 80 | 90 | 100 |
| Belastung Ps | 0,94 | 2,06 | 3,46 | 5,40 | 7,70 | 10,4 | 14,1 | 18,4 | 24,8 | 27,9 |

### Ergebnisse

**Tabelle 1**

| Abgase | HC(g/km) | CO (g/km) | NOₓ(g/km) | CO₂(g/km) |
|---|---|---|---|---|
| ohne Kat. | 1,42 | 16,01 | 2,19 | 328,28 |
| mit Kat. | 0,51 | 5,76 | 0,21 | 351,49 |

Das Experiment mit dem Katalysator D wurde im Shanghai Umweltschutzzentrum durchgeführt.

### I. Geräte:

1. Ein tragbarer Autoabgaseanalyser MEXA-324F der Japanischen Firma HORIBA, der von Fuoshan Analysegrät Fabrik montiert worden ist.
2. Ein tragbarer Luftprobenehmer der Japanischen Firma MECS
3. Ein Staubprobenehmer FC-A-3 der Shanghai Hongwei Gerätfabrik
4. Ein Thermometer XMX-101 der Shanghai Chuansua Thermogerätfabrik

### II. Methode und Grundlage

Abgase wurde beim Anbringen des Katalysator und nach 112 TKM. nach der Messungsmethode "GB3845-83" und den Normen in "Handbuch der Umweltschutztechnik" gemessen.

### III.Ergebnisse:

**Tabelle 2**

| KZ:SH01/03440 (EQ140) | CO% | HC (ppm) | NOₓ (mg/m³) | Pb (mg/m³) | Temp. °C |
|---|---|---|---|---|---|
| ohne Kat. | 7,75 | 4700 | 6,510 | 1,93 | 168 |
| mit Kat. | 0,01 | 12,5 | 0,526 | 0,141 | 350 |
| Leistung % | 99,9 | 99,7 | 91,9 | 92,7 | |

### Reinigungsergebnisse nach 110 TKM

**Tabelle 3**

| KZ:SH01/03440 (SH142) | CO% | HC (ppm) | NOₓ (mg/m³) | Pb (mg/m³) | Temp. °C |
|---|---|---|---|---|---|
| ohne Kat. | 4,0 | 1500 | 8,854 | 5,88 | 198 |
| mit Kat. | 0,775 | 210 | 1,103 | 2,81 | 500 |
| Leistung% | 80,6 | 86,0 | 87,2 | 52,2 | |

Wie es in Tabelle 1 steht, hat der Katalysator eine sehr gute Reinigungsleistung. Alle Daten liegen über 91%. Der Katalysator beschleunigt die Verbrennung. In kurze Zeit erreichen die Abgase die in Tabelle 2 aufgezeichnete Temperatur. Tabelle 3 zeigt die Reinigungsleistung nach 112,000 km. Die Reinigungsleistungen (außer Pb) liegen immer noch über 80%. Aber die Aktivität des Katalysator lässt nach. Die Abgasetemperatur steigt langsamer. Die Temperatur in Tabelle 3 ist durch steigende Abgasemenge bei langen untertourigen Laufen des Motors erreicht worden. Außerdem wurde das Produkt von dem Shanghai Verkehrsamt getestet. Die Ergebnisse zeigen, daß bei 35 bis 36 TKM Tacho-Zustand die Reinigungsleistung mit HC und CO jeweils bei 99,8% und 99,6% und bei 86 TKM Zustand bei zwischen 93,05% und 96,9% liegen. Dieses Produkt verfügt somit nachweislich über eine hervorragende Reinigungsleistung und eine lange Lebensdauer.

Im Shanghai Umweltschutzzentrum wurde der Katalysator F getestet.
1. Versuchsmethode:
Die Ermittlung des Gehaltes von CO und HC wurde nach der Messungsmethode "GB3845-83" der Autoabgase durchgeführt. NOₓ, SO₂ und Pb wurden nach den Normen der Umweltschutztechnik ermittelt.

2. Versuchsbedingungen:
Beim Versuch blieb die Wassertemperatur des Autos bei 80°C.Mit Hilfe desKatalysators sank die Abgasetemperatur auf 48°C. Ohne Kat. war es 146°C. Das getestet Fahrzeug war ein Dongfeng LKW mit Kennzeichen WJ-08-N0414.

3.Verwendete Geräte:
CO und HC wurden mit einem Infrarot-Autoabgase-Analysegerät von der Firma Fuoshan Analysegerätfabrik untersucht, das aus einem Gerät des Typs Japan Mexa-324F zusammengebaut worden war. NOₓ und SO₂ wurden mit Hilfe des U-Glasflaschen gesammelt, dann mit Salzsäure-Athylamin- Kolorimetrie und Salzsäure-Roseamilin-Kolorimetrie analysiert. Ein Analysegerät, UV-240 Lichtteilungsphotometer von der Firma Japan Daojin, wurde verwendet. Pb wurde mit Glasfaserfilter gesammelt, dann mit dem Atomabsorptionsanalysegerätn, nämlich dem Atomabsorption-Lichtteilungsphotometer 180-70 der Firma HITACHI untersucht.

4. Ergebnisse

**Tabelle 4**

| LKW | CO% | HC (ppm) | SO₂ (mg/m³) | NOₓ (mg/m³) | Pb (mg/m³) |
|---|---|---|---|---|---|
| ohne Kat. | 4,8 | 3880 | 2,005 | 7,74 | 3,80 |
| mit Kat. | 1,2 | 650 | 0,019 | 3,07 | 0,081 |
| Leistung% | 75,0 | 83,2 | 99,0 | 60,3 | 97,9 |

Die Teste mit und ohne Katalysator wurden gleichzeitig durchgeführt. Die Daten in Tabelle 4 zeigt, daß die verschiedene Verunreinigungen durch die Wirkung des Katalysators erheblich gereinigt worden sind. Bei der Abgasetemperatur 48°C erreichen die Reinigungsleistungen für SO₂ und Pb bis 99,0% und 97,9%.Für CO und HC bis 75,0% und 83,2%. Für NOₓ immerhin 60,3%,dies werde auf die niedrige Abgasetemperatur zurückzuführen.
Die Daten in Tabelle 1 werden hier in g/mile umgerechnet und dann in Tabelle 5 mit den kalifornischen und kanadischen Abgasenormen vergleichen:

**Tabelle 5**

| Qienoji CX-1 | CO(g/mile) | HC(g/mile) | NOₓ(g/mile) |
|---|---|---|---|
| USA FTP-75 | 7 | 0,41 | 1 |
| Kanada | 7 | 0,41 | 1 |
| ohne Kat. | 10,01 | 0,888 | 1,37 |
| mit Kat. | 3,6 | 0,318 | 0,13 |

Es zeigt, daß sämtliche Anforderungen in USA und Kanada erreicht wurden.

### Gewerbliche Anwendbarkeit

Der Katalysator dieser Erfindung hat die Fähigkeit, HC, NOₓ, Sulfid und Pb zu verringern. Er kann bei niedriger Temperatur arbeiten und hat eine hohe Abbauleistung und Lebensdauer. In Auspuff des Fahrzeugs braucht keinen Sauerstoffsensor und Erhitzer angebracht werden.

## Patentansprüche

1. Katalysator zur Reinigung von Autoabgasen, der einen geeigneten Träger aufweist,
**dadurch gekennzeichnet,**
**daß** der Katalysator als Aktivkomponenten folgende Bestandteile umfaßt: Cu-, Ni-, Co-, Zn-, Cr-, Mn- und Nd-oxide sowie Mischoxide aus zwei oder mehreren dieser Metalloxide und zwar mit folgenden auf das Trägergewicht bezogenen Gewichtprozentsätze:
| | |
|---|---|
| CuO | 2 -- 20% |
| NiO | 0,5 -- 8% |
| CoO | 0,1 -- 4% |
| Cr₂O₃ | 1 -- 7% |
| ZnO | 0,5 -- 10% |
| MnO | 0,05 -- 6% |
| Nd₂O₃ | 0,1 -- 1% |

2. Katalysator nach dem Anspruch 1, **dadurch gekennzeichnet, daß** die auf das Trägergewicht bezogene Gewichtprozentsätze der Medtalloxide wie folgt sind:
| | |
|---|---|
| CuO | 4 -- 16% |
| NiO | 2 -- 6% |
| CoO | 0,4 -- 3% |
| Cr₂O₃ | 2 -- 5% |
| ZnO | 1 -- 8% |
| MnO | 0,1 -- 5% |
| Nd₂O₃ | 0,3 -- 0,9% |

3. Katalysator nach Ansprüchen 1 oder 2, **gekennzeichnet durch** einen Gehalt an γ-Al₂O₃, dessen auf das Trägergewicht bezogener Gewichtprozentsatz zwischen 2 bis 12 % liegt.

4. Katalysator zur Reinigung von Indurtrieabgasen, der einen geeigneten Träger aufweist, **dadurch gekennzeichnet, daß** der Katalysator als Aktivkomponenten folgende Bestandteile umfaßt: Cu-, Ni-,Co-, Zn-, Cr-, Mn-, Fe- und Nd-oxide sowie Mischoxide aus zwei oder mehreren Metalloxiden und zwar mit folgenden auf das Trägergewicht bezogenen Gewichtprozentsätze:
| | |
|---|---|
| CuO | 2 -- 20% |
| ZnO | 2 -- 16% |
| NiO | 0,5 -- 8% |
| CoO | 0,1 -- 4% |
| Cr₂O₃ | 1 -- 7% |
| Fe₂O₃ | 0,2 -- 1,5% |
| MnO | 0,05 -- 6% |
| Nd₂O₃ | 0, 1 -- 1% |

5. Katalysator nach Anspruch 4, **dadurch gekennzeichnet, daß** die auf das Trägergewicht bezogenen Gewichtprozentsätze der Metalloxide wie folgt sind:
| | |
|---|---|
| CuO | 4 -- 16% |
| ZnO | 6 -- 12% |
| NiO | 2 -- 6% |
| CoO | 0,4 -- 3% |
| Cr₂O₃ | 2 -- 5% |
| Fe₂O₃ | 0,4 -- 1% |
| MnO | 0,1 -- 5% |
| Nd₂O₃ | 0,3 --0,9% |

6. Katalysator nach Anspruch 1 oder 4, **dadurch gekennzeichnet, daß** der Träger Keramik umfaßt.

7. Katalysator nach Anspruch 6, **dakurch gekennzeichnet, daß** der Keramikträger mehr als 92% Cordierite enthält, dessen Hygroskozipität zwischen 35 bis 40% liegt und dessen spezifische Oberfläche > 3 m²/g ist.

8. Katalysator nach Anspruch 1 oder 4, **dadurch gekennzeichnet, daß** er mit einer alkalischen Tier- und Pflanzenfett-Lösung oder Seifenlösung getränkt und getrocknet worden ist.

9. Katalysator nach Anspruch 8, **dadurch gekennzeichnet, daß** die Seifenlösung ein Natriumstearat ist.

## Claims

1. Catalyst for purification of automotive vehicle exhaust gas comprising a suitable carrier,
**characterised in that** the catalyst includes, as active component, the following ingredients:
oxides of Cu, Ni, Co, Zn, Cr, Mn and Nd as well as of mixed oxides of one or several of these metal oxides, the components having the following weight percentages related to the carrier weight:
| | |
|---|---|
| CuO | 2 -- 20 per cent |
| NiO | 0.5 -- 8 per cent |
| CoO | 0.1 -- 4 per cent |
| Cr₂O₃ | 1 -- 7 per cent |
| ZnO | 0.5 -- 10 per cent |
| MnO | 0.05 -- 6 per cent |
| Nd₂O₃ | 0.1 -- 1 per cent. |

2. Catalyst according to claim 1 wherein the percentages per weight of the metal oxides related to the carrier weight are as follows:
| | |
|---|---|
| CuO | 4 -- 16 per cent |
| NiO | 2 -- 6 per cent |
| CoO | 0.4 -- 3 per cent |
| Cr₂O₃ | 2 -- 5 per cent |
| ZnO | 1 -- 8 per cent |
| MnO | 0.1 -- 5 per cent |
| Nd₂O₃ | 0.3 -- 0.9 per cent. |

3. Catalyst according to claims 1 or 2,
**characterised by** a content of γ-Al₂O₃ having a percentage per weight related to the carrier weight between 2 and 12 per cent.

4. Catalyst for purification of industrial exhaust gas including a suitable carrier,
**characterised in that** the catalyst comprises as active components the following ingredients:
the oxides of Cu, Ni, Co, Zn, Cr, Mn, Fe and Nd as well as mixed oxides of two or more metal oxides, the ingredients comprising the following percentages per weight related to the carrier weight:
| | |
|---|---|
| CuO | 2 -- 20 per cent |
| ZnO | 2 -- 16 per cent |
| NiO | 0.5 -- 8 per cent |
| CoO | 0.1 -- 4 per cent |
| Cr₂O₃ | 1 -- 7 per cent |
| Fe₂O₃ | 0.2 -- 1,5 per cent |
| MnO | 0.05 -- 6 per cent |
| Nd₂O₃ | 0.1 -- 1 per cent. |

5. Catalyst according to claim 4 wherein the percentage per weight related to the carrier weight of the metal oxides are as follows:
| | |
|---|---|
| CuO | 4 -- 16 per cent |
| ZnO | 6 -- 12 per cent |
| NiO | 2 -- 6 per cent |
| CoO | 0.4 -- 3 per cent |
| Cr₂O₃ | 2 -- 5 per cent |
| Fe₂O₃ | 0.4 -- 1 per cent |
| MnO | 0.1 -- 5 per cent |
| Nd₂O₃ | 0.3 -- 0.9 per cent. |

6. Catalyst according to claim 1 or 4 wherein the carrier comprises ceramic.

7. Catalyst according to claim 6 wherein the ceramic carrier comprises more than 92 per cent cordierite having a hydroscopicity between 35 and 40 per cent and having a specific surface > 3 m²/g.

8. Catalyst according to claim 1 or 4,
**characterised in that** it has been impregnated with an alcaline animal and plant fat solution or soap solution, and dried.

9. Catalyst according to claim 8 wherein the soap solution is a sodium stearate.

## Revendications

1. Catalyseur pour l'épuration de gaz d'échappement de véhicules automobiles, comportant un substrat approprié et présentant les caractéristiques suivantes :
le catalyseur comprend les composants actifs suivants :
oxydes de Cu, Ni, Co, Zn, Cr, Mn et Nd ainsi que des oxydes mixtes composés de deux ou plus de ces oxydes métalliques selon les pourcentages massiques suivants par rapport au substrat :
| | |
|---|---|
| CuO | 2 -- 20 % |
| NiO | 0.5 -- 8 % |
| CoO | 0.1 -- 4 % |
| Cr₂O₃ | 1 -- 7 % |
| ZnO | 0.5 -- 10 % |
| MnO | 0.05 -- 6 % |
| Nd₂O₃ | 0.1 -- 1 %. |

2. Catalyseur selon la revendication 1 **caractérisé par** les pourcentages massiques suivants des oxydes métalliques par rapport au substrat :
| | |
|---|---|
| CuO | 4 -- 16 % |
| NiO | 2 -- 6 % |
| CoO | 0.4 -- 3 % |
| Cr₂O₃ | 2 -- 5 % |
| ZnO | 1 -- 8 % |
| MnO | 0.1 -- 5 % |
| Nd₂O₃ | 0.3 -- 0.9 %. |

3. Catalyseur selon les revendications 1 ou 2**caractérisé par** une teneur en γ-Al₂O₃ dont le pourcentage massique par rapport au substrat est compris entre 2 et 12 %.

4. Catalyseur pour l'épuration d'effluents gazeux industriels, comportant un substrat approprié et présentant les caractéristiques suivantes :
le catalyseur comprend les composants actifs suivants :
oxydes de Cu, Ni, Co, Zn, Cr, Mn, Fe et Nd ainsi que des oxydes mixtes composés de deux ou plus de ces oxydes métalliques selon les pourcentages massiques suivants par rapport au substrat :
| | |
|---|---|
| CuO | 2 -- 20 % |
| ZnO | 2 -- 16 % |
| NiO | 0.5 -- 8 % |
| CoO | 0.1 -- 4 % |
| Cr₂O₃ | 1 -- 7 % |
| Fe₂O₃ | 0.2 -- 1,5 % |
| MnO | 0.05 -- 6 % |
| Nd₂O₃ | 0.1 -- 1 %. |

5. Catalyseur selon la revendication 4 **caractérisé par** les pourcentages massiques suivants des oxydes métalliques par rapport au substrat :
| | |
|---|---|
| CuO | 4 -- 16 % |
| ZnO | 6 -- 12 % |
| NiO | 2 -- 6 % |
| CoO | 0.4 -- 3 % |
| Cr₂O₃ | 2 -- 5 % |
| Fe₂O₃ | 0.4 -- 1 % |
| MnO | 0.1 -- 5 % |
| Nd₂O₃ | 0.3 -- 0.9 %. |

6. Catalyseur selon les revendications 1 ou 4 **caractérisé par le fait que** le substrat comprend de la céramique.

7. Catalyseur selon la revendication 6 **caractérisé par le fait que** le substrat en céramique contient plus de 92% de cordiérite dont l'hygroscopie est comprise entre 35 et 40% et dont la surface massique est > 3 m²/g.

8. Catalyseur selon les revendications 1 ou 4 **caractérisé par le fait qu'**il a été imbibé d'une solution alcaline de graisses animales et végétales ou lessive de savon et séché.

9. Catalyseur selon la revendication 8 **caractérisé par le fait que** la lessive de savon est un stéarate de sodium.
